# EUROPEAN PATENT APPLICATION

(11) **EP 2 696 659 A2**
(43) Date of publication of application: **12.02.2014**
(21) Application number: 13179872.0
(22) Date of filing: 09.08.2013
(51) Int. Cl.: H05B 33/08, H05B 37/02

(54) **Energy-saving illumination device having brightness adjusting module**

(30) Priority: 10.08.2012 TW 101215439
(71) Applicant: Kangzhun Electronical Technology (Kunshan) Co., Ltd., Kunshan Jiangsu (CN); Light Shuo Technology Co., Ltd, New Taipei (TW)
(72) Inventor: Chan, Yung-Cheng, Banqiao Dist., New Taipei (TW)
(74) Representative: Gray, John James

(57) **Abstract**

An illumination device (1) which self-responds to the level of ambient light in its own environment includes a lamp holder (10), a light source (20), a brightness adjusting module (30), a light sensing unit (40), and a driving control unit (50). The lamp holder (10) defines an inserting groove (11) according to a connector (13) placed above a circuit board (12). The automatically brightness adjusting module (30) includes a connecting port (31), and is inserted into the inserting groove (11). The connecting port (31) is electrically connected to the connector (13). The light sensing unit (40) is position on the automatically brightness adjusting module (30), for receiving a light intensity and emitting a signal according to the light intensity. The driving control unit (50) is positioned on the automatically brightness adjusting module (30), and electrically connected to the light sensing unit (40) and the connecting port (31), for receiving the signal and emitting a driving signal, thus the light source (20) emits lights of an corresponding illumination intensity according to the driving signal.

## Description

### BackGround

### Field

The present disclosure relates to an energy-saving illumination device having a brightness adjusting module, and particularly to an energy-saving illumination device capable of automatically adjusting an illumination brightness by sensing a light intensity in an environment.

### BackGround

A suitable light intensity may be 400-450 lumens in a room for daily life, 300-800 lumens in office for office work, or 1000 or more in a public or commercial place. An illumination device may be a light tube or a bulb which emits lights at a certain unchanging intensity. Due to sunlight during the day, no additional illumination is needed at predetermined positions, such as near a window of a room. If a room requires uniform brightness, the brightness of illumination devices at different positions in the room need to be different.

Illumination devices in a room cannot self-adjust for brightness according to different ambient light levels in different positions in the room. Therefore, the room cannot obtain a uniform brightness. In addition, the illumination device includes a sensor and a light tube or a bulb integrated with the sensor. When the sensor or light tube or bulb is damaged, the entire illumination device must be replaced, which results in waste and high repair cost.

Therefore, there is room for improvement in the art.

### Summary

According to one aspect of the disclosure, an illumination device which self-responds to the level of ambient light in its own environment including a lamp holder, a light source, a brightness adjusting module, a light sensing unit, and a driving control unit. The lamp holder defines an inserting groove according to a connector placed above a circuit board. The automatically brightness adjusting module includes a connecting port, and is inserted into the inserting groove. The connecting port is electrically connected to the connector. The light sensing unit is position on the automatically brightness adjusting module, for receiving a light intensity and emitting a signal according to the light intensity. The driving control unit is positioned on the automatically brightness adjusting module, and electrically connected to the light sensing unit and the connecting port, for receiving the signal and emitting a driving signal, thus the light source emits lights of an corresponding illumination intensity according to the driving signal.

### BRIEF DESCRIPTION OF THE DRAWINGS

The components in the drawings are not necessarily drawn to scale, the emphasis instead being placed upon clearly illustrating the principles of the present disclosure. Moreover, in the drawings, like reference numerals designate corresponding parts throughout several views.

FIG. 1 is an exploded, isometric view of a first embodiment of an energy-saving illumination device having a brightness adjusting module, a light source and a lamp holder, the lamp holder including an inserting groove.

FIG. 2 is a partial, isometric view of the brightness adjusting module when inserted into the inserting groove of the lamp holder shown in FIG. 1.

FIG. 3 is a side view of the brightness adjusting module when inserted into the inserting groove of the lamp holder shown in FIG. 2.

FIG. 4 is a block diagram of the brightness adjusting module and the light source shown in FIG. 1.

FIG. 5 is a partial, side view of a second embodiment of a energy-saving illumination device including an brightness adjusting module and a light source.

FIG. 6 is a block diagram of the brightness adjusting module and the light source shown in FIG. 5.

FIG. 7 is a schematic view of the energy-saving illumination device shown in FIG. 1 in a state of use.

### DETAILED DESCRIPTION

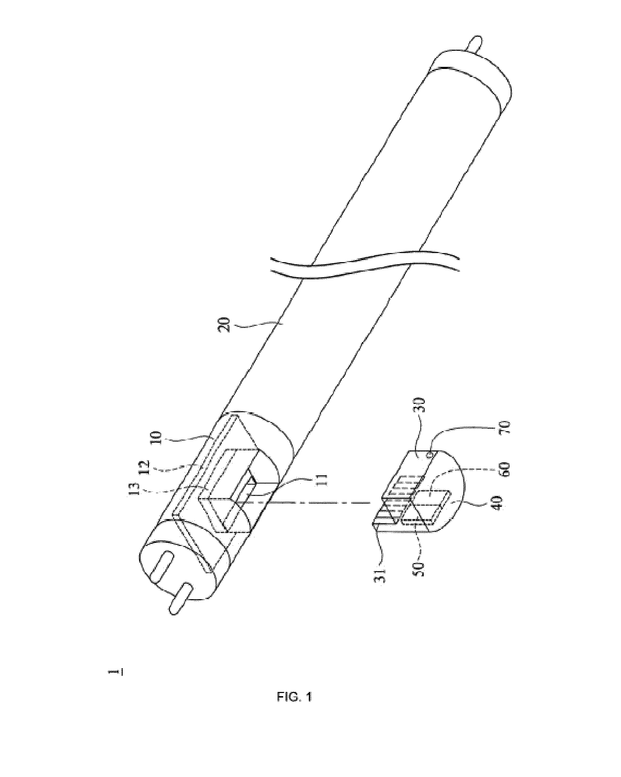

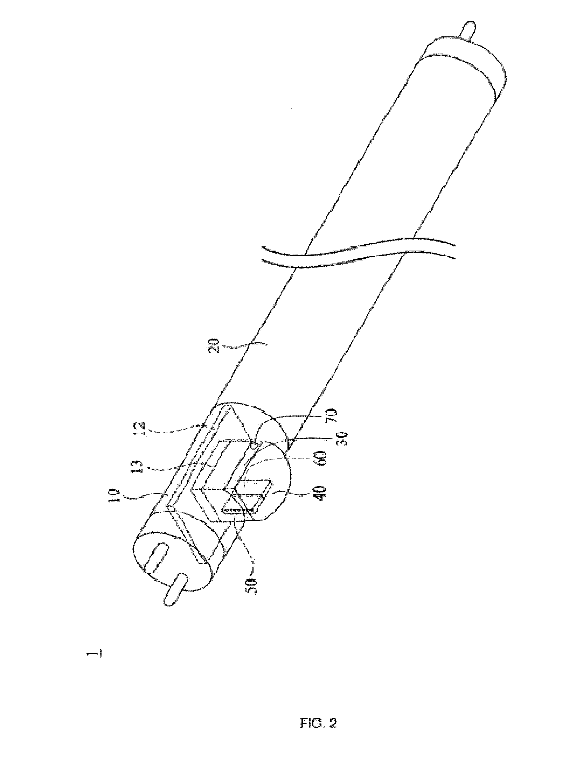

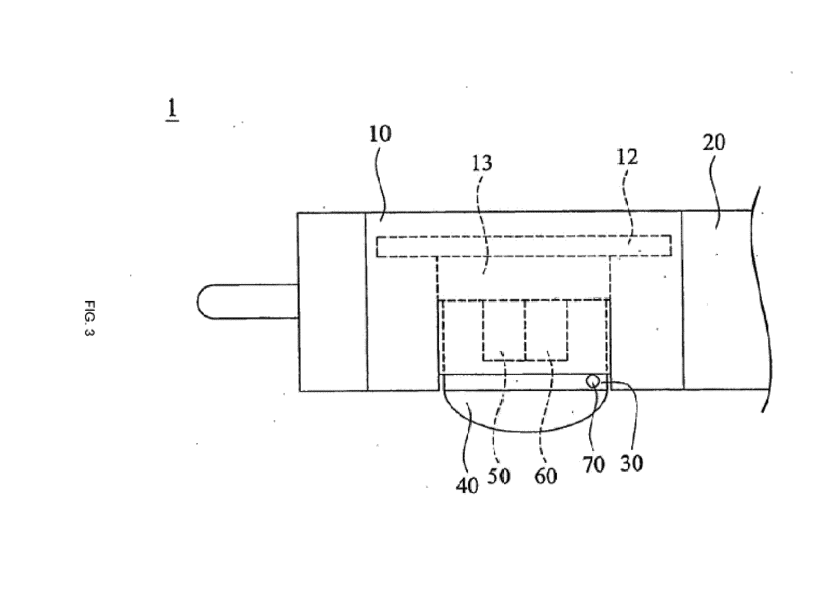

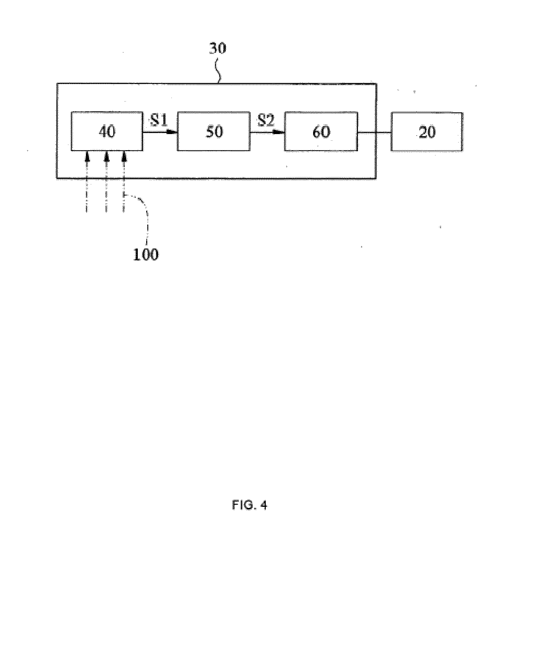

FIGS. 1 to 4 show a first embodiment of an energy-saving illumination device 1 capable of sensing an ambient light intensity, and then self-adjusting an illumination brightness of the energy-saving illumination device 1 according to the light intensity. The energy-saving illumination device 1 includes a lamp holder 10, a light source 20, a brightness adjusting module 30, a light sensing unit 40, and a driving control unit 50. The lamp holder 10 defines an inserting groove 11. The inserting groove 11 is defined to accord with a connector 13 placed on a circuit board 12. The circuit board 12 is placed in the lamp holder 10. The light source 20 is assembled to and held by the lamp holder 10, and is electrically connected to the circuit board 12. The brightness adjusting module 30 includes a connecting port 31. The brightness adjusting module 30 is inserted into the inserting groove 11, and the connecting port 31 is electrically connected to the connector 13. The light sensing unit 40 is positioned on the brightness adjusting module 30 (shown in FIG. 4), and is configured to sense a light intensity 100 of the environment and emit a sensing signal S1 according to the light intensity 100. The driving control unit 50 is positioned in the brightness adjusting module 30, and is electrically connected to the light sensing unit 40 and the connecting port 31. The driving control module 50 is configured to receive the signal S1 and emit a driving signal S2, thus the light source 20 changes an illumination intensity according to the driving signal S2.

In the illustrated embodiment, the light source 20 is an LED light source, and includes an LED light tube or bulb consisting of a plurality of LED modules. The LED modules are electrically driven photoelectric components, and are capable of changing a illumination intensity according to an input driving current or an input driving voltage. That is, the signal S1 is a required current value or a required voltage value. The driving signal S2 is a driving current value or a driving voltage value. The driving control unit 50 includes an LED control IC for generating the driving signal S2 according to the signal S1, to control a current applied to the light source 20 to linearly adjust an illumination intensity of the light source 20.

In an illustrated embodiment, the LED control IC is an AP1909 LED (part name of LED of Anwell Semiconductor Corp.) control IC. The light sensing unit 40 includes a light-dependent resistance. The LED control IC includes a plurality of pins having functions, such as connecting to a voltage source, connecting to an LED light source, connecting to ground, connecting to an outer driving MOSFET, connecting to a Pulse-Width Modulation (PWM) device, connecting to a voltage input of a logic circuit, connecting to a linear brightness adjusting input, and connecting to a frequency control input of an outer resistance, and so on. The light-dependent resistance of the light sensing unit 40 is connected to the input pin for linear adjustment of brightness. The signal S1 of the light sensing unit 40 indicates different currents according to different light intensities 100. The signal S1 is transmitted to the LED control IC of the driving control unit 50, and then the LED control IC emits a driving signal S2 of different voltages according to the ambient light level indicated in the signal S1. Thus, the light source 20 emits a light of a different illumination intensity. The light intensity 100 is adjusted accordingly, to effectively achieve an even brightness throughout the room. In an alternative embodiment, a type of the electrical elements, such as the LED control IC, can be changed according to different needs of the energy-saving illumination device 1.

The brightness adjusting module 30 of the energy-saving illumination device 1 is detachable and replaceable, and the light sensing unit 40 and the driving control unit 50 received in the brightness adjusting module 30 can adjust the illumination brightness of the independent light tube or bulb (the light source 20).

In an alternative embodiment, the energy-saving illumination device 1 further includes a circuit protecting unit 60 received in the brightness adjusting module 30. The circuit protecting unit 60 is configured to break an electrical connection between the driving control unit 50 and the circuit board 12 when a current or a voltage is abnormal, or when a temperature of the light source 20 is higher than a permitted maximum, to prevent damage to the light source 20. The circuit protecting unit 60 is a fuse in the illustrated embodiment, and avoids a permanent current overload applied to the light source 20.

In an alternative embodiment, the energy-saving illumination device 1 further includes a state indicating unit 70 positioned on the brightness adjusting module 30, and is electrically connected to the light sensing unit 40 and the driving control module 50 to indicate a normal state or an abnormal state of the energy-saving illumination device 1. In the illustrated embodiment, the state indicating unit 70 includes an LED indicating light source. The LED indicating light source is capable of emitting lights of different colors, to indicate the normal state and the abnormal state of the light sensing unit 40, the driving control unit 50, and the other electrical components of the energy-saving illumination device 1. When the state indicating unit 70 indicates the abnormal state, the energy-saving illumination device 1 may be repaired or replaced.

In an alternative embodiment, the brightness adjusting module 30 can be plate-like or sheet-like, such as a card inserting type, so that users can conveniently insert the brightness adjusting module 30 into the inserting groove 11 of the lamp holder 10, giving the energy-saving illumination device 1 the brightness adjusting function. In addition, when the light source 20 is a durable LED light source, because the brightness adjusting module 30 is detachable, the brightness adjusting module 30 can be replaced with a new module if the original is damaged, thereby avoiding waste.

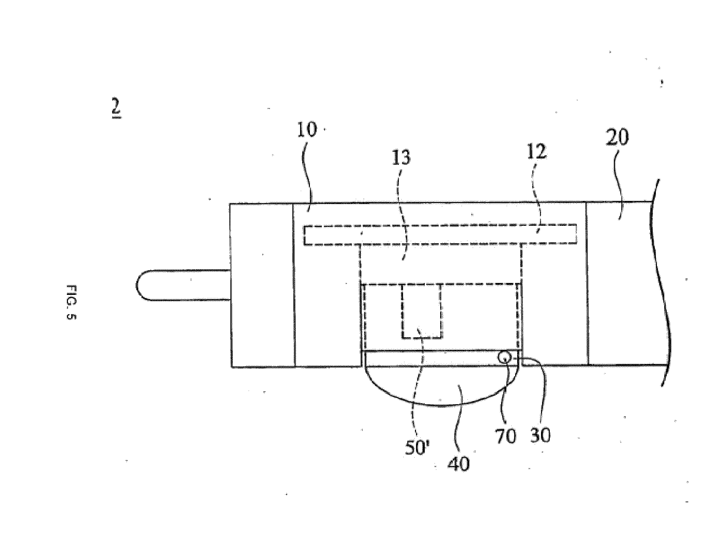

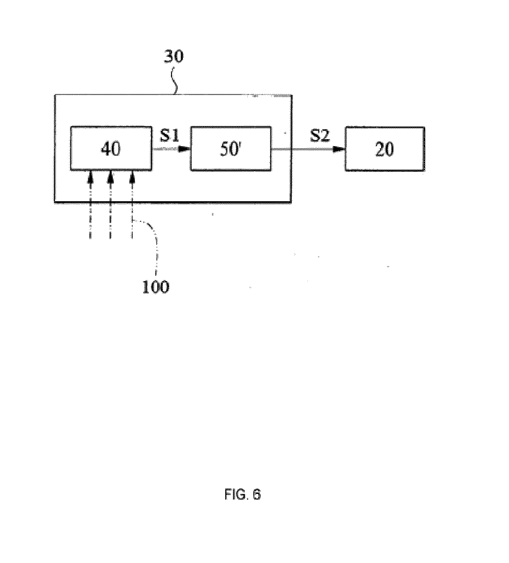

FIGS. 5 and 6 show a second embodiment of an energy-saving illumination device 2 similar to the energy-saving illumination device 1 of the first embodiment, except that the energy-saving illumination device 2 includes a driving control module 50' having an LED driving control IC and a protective IC. The driving control module 50' breaks an electrical connection between the driving control unit 50' and the circuit board 12 when there is a current or voltage abnormality, or when a temperature of the light source 20 is higher than a permitted maximum to prevent damage to the light source 20.

The energy-saving illumination devices 1, 2 can prevent damage to the light source 20 when a supply voltage is abnormal, or there is a short circuit of electrical components of the circuit or one or more light-emitting diodes of the light source 20. In addition, the illumination device 1 and the energy-saving illumination device 2 can protect the light source 20 from a high temperature, and avoid low-efficiency operation if the light-emitting diodes of the light source 20 are sensitive to heat. The energy-saving illumination devices 1, 2 are durable and have a long lifespan.

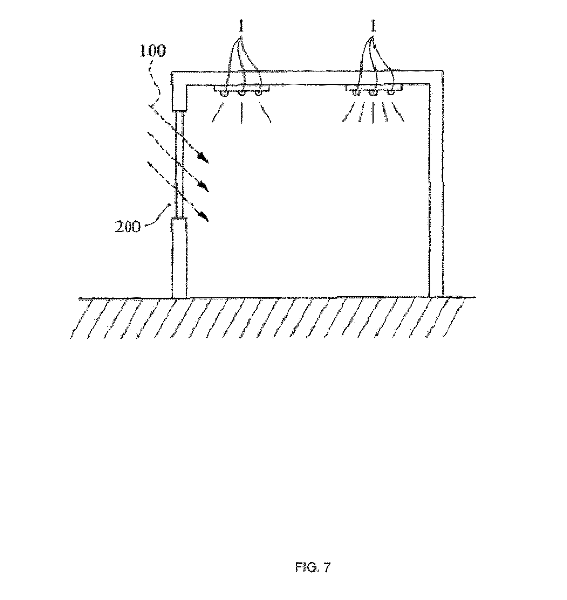

FIG. 7 shows two energy-saving illumination devices 1 used in a room (not labeled) having a window 200 to the outside. The energy-saving illumination devices 1 are capable of sensing a light intensity 100 of the room by the light sensing unit 40 and controlling a respective brightness of the light emitted by each of the two light source 20 by the driving control units 50. Due to sunlight, an ambient brightness near the window 200 is greater than in other positions, thus the light source 20 of the energy-saving illumination device 1 close to the window 200 emits lower intensity light compared to the light of the light source 20 of the energy-saving illumination device 1 which is further from the window 200. Thus, an even brightness is obtained anywhere in the room. The illumination device 1 senses a light intensity of the environment and self-adjusts a brightness of the light emitted by the light source accordingly. When the ambient light intensity in the room is higher, the energy-saving illumination devices 1 emit light of lower intensity, and vice versa. Thus, the room obtains a uniform brightness at any time and saves energy.

The energy-saving illumination devices 1, 2 have brightness adjusting modules 30, and the brightness adjusting modules 30 can be replaced separately when damaged, resulting in decreased repair costs, waste, and environmental pollution. In addition, when the environment has different light intensities, each energy-saving illumination devices 1, 2 can emit light of a certain brightness, to create an even brightness.

It is believed that the present embodiments and their advantages will be understood from the foregoing description, and it will be apparent that various changes may be made thereto without departing from the spirit and scope of the embodiments or sacrificing all of its material advantages.

## Claims

1. An energy-saving illumination device comprising:
a lamp holder comprising a circuit board and a connector fixed on the circuit board, the lamp holder defining an inserting groove according to the connector;
a light source assembled to and held by the lamp holder, and electrically connected to the circuit board;
a brightness adjusting module inserted into the inserting groove and
comprising a connecting port electrically connected to the connector;
a light sensing unit received in the brightness adjusting module to receive an ambient light intensity and emit a sensing signal according to the light intensity;
and
a driving control unit received in the brightness adjusting module, and
electrically connected to the light sensing unit and the connecting port, to receive the sensing signal and emit a driving signal, wherein the light source emits light at an illumination intensity according to the driving signal.

2. The energy-saving illumination device of claim 1, wherein the light source comprises an LED light source, the driving control unit comprises an LED driving control IC, and the LED driving control IC emits the driving signal according to the sensing signal to turn the light source on or off, or adjust an illumination intensity of the light source.

3. The energy-saving illumination device of claim 2, further comprising a circuit protecting unit positioned on the brightness adjusting module to break an electrical connection between the driving control unit and the circuit board when there is a current or voltage abnormality, or when a temperature of the light source is higher than a permitted maximum temperature.

4. The energy-saving illumination device of claim 3, wherein the circuit protecting unit comprises a fuse.

5. The energy-saving illumination device of claim 2, 3 or 4, wherein the driving control unit comprises an IC protective circuit to break an electrical connection between the driving control unit and the circuit board when current or voltage is abnormal, or a temperature of the light source is higher than a permitted maximum temperature.

6. The energy-saving illumination device of any preceding claim, further comprising a state indicating unit positioned on the brightness adjusting module and electrically connected to the light sensing unit and the driving control unit, to indicate a normal state or an abnormal state of the energy-saving illumination device.

7. The energy-saving illumination device of any preceding claim, wherein the light sensing unit comprises a light-dependent resistance, and the sensing signal is a current value.

8. The energy-saving illumination device of any preceding claim, wherein the light sensing unit comprises a light-dependent resistance, the sensing signal is a voltage value.

9. The energy-saving illumination device of any preceding claim, wherein a shape of the brightness adjusting module is substantially a plate or a sheet.

10. An energy-saving illumination device comprising:
a lamp holder defining an inserting groove;
a circuit board placed in the lamp holder;
a connector received in the lamp holder and placed above the circuit board and in the lamp holder;
a light source assembled to and held by the lamp holder, and electrically connected to the circuit board;
a brightness adjusting module inserted into the inserting groove and
comprising a connecting port, the connecting port being electrically connected to the connector;
a light sensing unit received in the brightness adjusting module to receive an ambient light intensity and emit a sensing signal according to the light intensity;
a driving control unit received in the brightness adjusting module, and
electrically connected to the light sensing unit, the connecting port, and the circuit board, to receive the sensing signal and emit a driving signal, and the light source emits light at an illumination intensity according to the driving signal; and
a circuit protecting unit positioned on the brightness adjusting module to break electrical connections between the driving control unit and the circuit board when current is abnormal.

11. The energy-saving illumination device of claim 10, wherein the light source comprises an LED light source, the driving control unit comprises an LED driving control IC, and the LED driving control IC emits the driving signal according to the sensing signal, to turn the light source on or off, or adjust an illumination intensity of the light source.

12. The energy-saving illumination device of claim 10 or 11, wherein the circuit protecting unit breaks electrical connections between the driving control unit and the circuit board when current or voltage is abnormal, or a temperature of the light source is higher than a permitted maximum temperature.

13. The energy-saving illumination device of claim 10, 11 or 12, wherein the circuit protecting unit comprises a fuse.

14. The energy-saving illumination device of any of claims 10 to 13, wherein the driving control unit comprises an IC protective circuit to break an electrical connection between the driving control unit and the circuit board when current or voltage is abnormal, or a temperature of the light source is higher than a permitted maximum temperature.

15. The energy-saving illumination device of any of claims 10 to 14, further comprising a state indicating unit positioned on the brightness adjusting module and electrically connected to the light sensing unit and the driving control unit, to indicate a normal state or an abnormal state of the energy-saving illumination device.
